# EUROPÄISCHE PATENTANMELDUNG

(11) **EP 2 689 883 A1**
(43) Veröffentlichungstag der Anmeldung: **29.01.2014**
(21) Anmeldenummer: 12177682.7
(22) Anmeldetag: 24.07.2012
(51) Int. Cl.: B23K 26/00, B23K 26/06, B41C 1/055, B41C 1/05

(54) **Verfahren und Vorrichtung zum Erzeugen einer strukturierten Oberfläche auf eine Prägewalze aus Stahl**

(71) Anmelder: Boegli-Gravures S.A., CH-2074 Marin (CH)
(72) Erfinder: Boegli, Charles, CH-2074 Marin-Epagnier (CH); Weissmantel, Steffen, 09117 Chemnitz (DE); Reisse, Günter, 09117 Chemnitz (DE); Lickschat, Peter, 04668 Parthenstein (DE); Steffen, Werner, 6362 Stansstad (CH)
(74) Vertreter: Grosfillier, Philippe

(57) **Zusammenfassung**

Das Verfahren zur Strukturierung der Oberfläche einer Stahlprägewalze mittels Kurzpulslaser, wobei es sich bei der Strukturierung um eine Makrostrukturierung mit Dimensionen von über 20 µm und Tiefen bis über 150 µm handelt, zeichnet sich durch folgende Parameter-Kombination auf
a) im Einzelpulsbetrieb eine Fluenz im Bereich von 0,5 J/cm² bis 3,5 J/cm² und im Pulszugbetrieb eine mittlere Pulszug-Fluenz von 0,5 J/cm² bis 70 J/cm² Puls,
b) Wellenlänge von 532 nm bis 1064 nm,
c) Repetitionsrate von 1 kHz bis 10 MHz,
d) Puls-zu-Puls-Distanz auf dem Werkstück von 10% bis 50% des Strahldurchmessers für den Femtosekundenlaser und von 10- 25 % und 40-50% der Strahlbreite für den Picosekundenlaser,
e) Laserpulsposition nahe bei der Werkstückoberfläche, und
f) Ablenkgeschwindigkeiten bis über 100 m/s,
erzeugt wird. Ein solches Verfahren erlaubt die Herstellung einer vollständigen Prägewalze mit Zähnen, Lücken zur Erzeugung von Logos, wobei die Zähne variable Höhen, Formen und Abstände aufweisen können, zum Prägen von beispielsweise Innerlinern für die Zigarettenverpackung.

## Beschreibung

Die vorliegende Erfindung bezieht sich auf ein Verfahren und eine Vorrichtung zum Erzeugen einer strukturierten Oberfläche auf eine Prägewalze aus Stahl, gemäss Oberbegriff von Patentanspruch 1.

Prägewalzen aus Stahl z. B. zur Prägung von Folien, die als sogenannte Innerliner zur Verpackung von Zigaretten dienen, sind vor allem durch den gleichen Anmelder bekannt, z.B. aus der WO-2009/155720, US-7 036 347 oder EP 2 336 823. Mittels solcher Prägewalzen werden die Folien gleichzeitig satiniert, d.h. grossflächig homogen mit sehr feinen Vertiefungen versehen sowie mit Logos, wobei an diesen Logo-Stellen auf der Prägewalze die Zähne entweder vollständig oder teilweise entfernt wurden. Ausserdem können die Zähne und/oder Lücken der Prägewalzen gestaltet sein, Folien mit Authentifizierungsmerkmalen und/oder Verstärkungen und dergl. zu versehen. Ferner gibt es auch Prägewalzen, die gemäss EP 2 027 994 A2 des gleichen Anmelders als Falzwalzen ausgebildet sind.

Daraus geht hervor, dass die Prägewalzen gemäss Stand der Technik im Falle einer sogenannten Pin up - Konfiguration sehr feine Zähne oder im Falle einer sog. Pin down - Konfiguration den Zähnen entsprechende Vertiefungen aufweisen sowie Lücken, die ungeprägte Logos ergeben und dass die Zähne überlagerte Mikrostrukturierungen aufweisen können, wie z. B. gemäss der US-7 229 681.

Unter Folien mit einer Dicke von ca. 5 µm bis zu ca. 400 µm werden dünne Metallfolien, z.B. Aluminiumfolien, Kunststofffolien aller Art, hybrid aufgebaute Folien bestehend aus Papier und/oder Kunststoffschichten, gegebenenfalls mit Metallisierungen versehen und dergleichen verstanden. Dazu gehört auch die grosse Klasse der oben erwähnten Innerliner, welche z.B. in Zigarettenpackungen verwendet werden und z.B. aus metallisiertem Papier bestehen können.

Ausserdem ist zu beachten, dass mit rein mechanischer Bearbeitung zwar sehr gute qualitative und quantitative Resultate erzielt werden, die Möglichkeiten jedoch entsprechend den Dimensionen der Bearbeitungswerkzeuge beschränkt sind. Mechanische Bearbeitung hinterlässt stets Brauen oder andere ungewollte, störende Spuren. Vor allem lassen sich ohne enormen Aufwand keine grossen Walzenoberflächen mit komplementären und ohne Selektion paarbaren positiv/negativ - Pater/Mater - oder Pin up - Pin down Strukturen herstellen.

In der RU-2368504 wird vorgeschlagen, vor allem die Logos-Lücken durch Elektroerosion oder elektrochemisch herzustellen, wobei die Zähne auch derart oder mechanisch gefertigt werden können. Auf homogenen Stoffen wie Kupfer gelingt dies in guter Qualität, währenddem auf Stahl die körnige Grundstruktur eine direkte hochqualitative Bearbeitung der Oberfläche erschwert. Diese Verfahren sind mit den heutigen Mitteln für eine industrielle, rationelle Fertigung ungeeignet, da enorm zeit- und materialaufwendig.

Mit den heutigen ablatierenden Lasersystemen vom Typ Neodym YAG mit Pulsbreiten um 30 ns gelingt es, über kleinere Flächen eine etwas feinere Bearbeitung bis hinunter zu ca. 70 µm Linienabstand bei einer Tiefe von ca. 100 µm zu erzielen.

Ausserdem sind Lasersysteme in der WO-2007/012215 A1, EP-2 327 502 A1 und EP-2 327 503 A1 offenbart, alle vom gleichen Anmelder, die geeignet sind, sehr feine Strukturen wie Gitterstrukturen auf Prägewalzen zu erzeugen, wobei Laser mit Pulslängen im Nano- bis Femtosekundenbereich zur Erzeugung von Gittern im Nanometerbereich verwendet werden.

Diese Verfahren eignen sich gut für die kleinflächige Mikrostrukturierung im µm- und Sub-µmbereich, sind jedoch für die vorgesehene, grossflächige und direkte Makrobearbeitung von Stahl ungeeignet, mit Strukturdetails ab ca. 20 µm in der Prägefläche. Walzen mit harten Stahloberflächen sind jedoch interessant, da sie die direkte schnelle Prägung von Folien und insbesondere von Innerlinern ermöglichen, wobei diese Folien dünn und relativ unelastisch sind und sich wegen ihrer Wasserdampf-Undurchlässigkeit hervorragend für die lebensmittelechte Verpackung eignen.

Es besteht jedoch das Bedürfnis, grosse Flächen, z. B. eine ganze Prägewalze oder gegebenenfalls mehrere gleiche Walzen schnell, deckungsgleich oder mit gewollten Differenzen, d.h. absolut und relativ zueinander sehr genau mit Strukturen ab 20 µm bis 400 µm und Tiefen bis zu 400 µm zu versehen, wobei solche Strukturen Zähne und gegebenenfalls zugeordnete Vertiefungen umfassen.

Ein bekanntes Gravurverfahren mittels Laser an mit Kunststoff überzogenen Zylindern erfolgt anhand von digital gespeicherten Daten, die ein in Pixel aufgelöstes Bild darstellen. Diese Pixel bilden üblicherweise Vertiefungen in Form von Näpfchen. Durch einen akustooptischen Modulator erfolgt eine Intensitätsmodulation des Laserstrahls in einer Anzahl Intensitätsstufen, welche z.B. gemäss EP 1 245 326 bei Abprägen der Prägeform auf z.B. eine Folie Graustufen oder Helligkeitsunterschiede erzeugen kann. Dabei beeinflussen sich durch Anordnung der Fokuspunkte in eine zweidimensionale Punktmatrix die eng benachbarten Gravuren der Punktmatrix ungünstig. Es kann zu erheblicher Wärmeerzeugung und unerwünschter Veränderung des Materials oder der lokalen Prägeform kommen. Störend sind ebenfalls die nicht kleinen Mengen an Ablationsrückständen sowie an von der Oberfläche abgesprengten Partikeln in der Umgebung des Näpfchens. Schliesslich erfolgt die Abarbeitung in Form von sogenannten Blockstrukturen, innerhalb der damit definierten Flächen, z.B. 10 mm mal 10 mm.

Die Bearbeitung des nächsten Blocks erfolgt nach Durchführung von mechanischen Bewegungen, die eine Diskontinuität sowie Erschütterungen erzeugen können, welche vor dem Bearbeitungsprozess relaxiert sein müssen. Zu grosse Sprünge können Luftverwirbelungen erzeugen, was die fortlaufende Absaugung der Rückstände erschweren kann.

Aus der WO-97/19783 ist es bekannt, für die Herstellung von Lasergravuren zwei verschiedene Laser zu verwenden, einen für die Feingravur und einen zweiten für die Tiefengravur. Es werden jedoch keinerlei spezifische Angaben über die Art, Leistung, Pulsdauer einerseits und Tiefe der Gravur andererseits offenbart.

In der US-5 416 298 und in der WO-2009/010244 A1 wird eine Lasergravureinrichtung offenbart, die sich zum Gravieren von rotativen Prägeformen eignet und gewisse oben erwähnte Nachteile bezüglich Blockverfahren nicht aufweist. Die Gravur erfolgt mit sehr hoher Geschwindigkeit und mit hoher Qualität in Form einer Schraubenlinie. Ein wesentlicher Vorteil besteht darin, dass durch die Verwendung einer Ablenkeinheit, wie z. B. ein akusto- oder elektrooptischer Modulator jeder Oberflächenpunkt nicht mit einem einzigen Laserpuls sondern durch mehrere Laserpulse bearbeitet wird. Zwischen dem Auftreffen der einzelnen Pulse kann die Zeitspanne so gross gewählt werden, dass eine gegenseitige Störung bzw. eine thermische Überbeanspruchung nicht erfolgt.

Die für die Herstellung wichtigen Daten für die eingangs genannten Prägewalzen mit den Makrostrukturen, d.h. mit der sehr grossen Anzahl von Zähnen mit einer Höhe von 0,1 bis 0,4 mm, mit zahnfreien Flächen zur Erzeugung von Logos verschiedenster Art oder von sonstigen Strukturen, bei welcher Bearbeitung trotz der massiven Zunahme der Gesamt-und der lokalen Erwärmung kein Schmelzen und Erweichen des Materials verursacht wird, wie bei vorbekannten Laseranlagen zu beobachten ist, sind jedoch nicht offenbart.

Zur Zeit ist zwar eine grosse Anzahl von kommerziell erhältlichen Laseranlagen bekannt, die die gewünschte Strukturierung der Oberflächen von Stahlwalzen ermöglichen könnten, jedoch nur, falls sie unter Berücksichtigung der Parametrisierung gemäss der Erfindung mit einer geeigneten Strahlsteuerung versehen werden.

Daraus folgend kann zusammengefasst werden, dass obwohl es möglich ist, mittels mechanischer Verfahren sehr feine Zähne mit einem Abstand von Spitze zu Spitze bis herunter zu 0,1 mm herzustellen und scharfe Logos zu erzeugen sowie Laseranlagen bekannt sind, um sehr feine Gitterstrukturen zu erzeugen, das Bedürfnis wächst und daraus folgend sich die Aufgabe der Erfindung ergibt, schneller und noch präziser feinere Oberflächen mit Makrostrukturen auf Prägewalzen aus Stahl zu erzeugen, die eine grössere Vielfalt von Gestaltungsmöglichkeiten, z.B. variable Zahnabstände und - formen und die industrielle Herstellung von Patrizen-Matrizenwalzen sowie einen vielfältigen Einsatz für unterschiedlichste Folienmaterialien ermöglichen.

Diese Aufgabe wird mit dem Verfahren und der Vorrichtung gemäss den unabhängigen Ansprüchen 1 und 6 gelöst, wonach spezielle Parameter für eine geeignete Steuerung des Abtragvorgangs unter spezifischen Bedingungen angegeben werden.

Die Erfindung wird im Folgenden anhand schematisierter Zeichnungen von Ausführungsbeispielen näher erläutert, wobei
- Fig. 1: ein erstes Ausführungsbeispiel einer erfindungsgemässen Laseranlage für eine kontinuierliche Gravur,
- Fig. 2: ein zweites Ausführungsbeipiel einer erfindungsgemässen Laseranlage für eine blockweise Gravur, und
- Fig. 3: eine schematische Darstellung von Laser-Pulsfolgen zeigt.

Eine wesentliche Neuheit des beschriebenen Verfahrens besteht in der Möglichkeit der makrodimensionalen Oberflächenstrukturierung von modernen Werkstoffen mit Gravurdimensionen von über 20 µm, insbesondere auch von über 70 µm und Gravurtiefen bis 400 µm, was sonst mit den herkömmlichen Laserbearbeitungs-Verfahren nicht möglich ist. Es besteht ein grosses Bedürfnis in der Makrotechnik, auch heterogene, hochlegierte Eisen-Basiswerkstoffe, welche in der Fertigungstechnologie immer wichtiger werden, oberflächlich strukturieren zu können. Der heterogene Gefügeaufbau dieser Werkstoffe ist unabdingbar für die speziellen Eigenschaften, welche die Oberflächen der Walzen aufweisen müssen.

Diese verschiedenen Gefügephasen haben jedoch sehr unterschiedliche physikalische Eigenschaften, was zu entsprechendem differenzierten, makroskopischen, lokalen Verhalten bei der Laserbearbeitung führt. Bisher konnten diese Werkstoffe aus diesen Gründen nicht wie gefordert wirtschaftlich laser-makrostrukturiert werden. Dank dem neuen, weiter unten angegebenen Verfahren sind nun auch solche Werkstoffe makrostrukturierbar. Das neue Verfahren ist kombinierbar mit einer Mikrostrukturierung und kann daher auch bei diesen komplexen, heterogenen Werkstoffen Strukturen von höchster Auflösung erzeugen, was werkstofftechnologisch ein Durchbruch bedeutet.

Das Bearbeiten von Druckzylindern für den Offsetdruck oder von anderen rotativen Prägeformen mittels Einsatz von Kurzpulslasern ist an sich seit einiger Zeit bekannt. Die heute bekannten thermisch ablatierenden Laserbearbeitungen mittels zB Yag:Nd - Laser im Bereich von Pulsbreiten von 30 ns und mehr erlauben es, Stahl-Oberflächen in Dimensionen von mehr als ca. 70 µm bei einer Tiefe von ca. 100 µm zu gravieren, wobei jedoch keine feinen Relief-Strukturen zuverlässig und schnell erzeugt werden können, da die Abtragungstiefe schwer kontrollierbar ist und andere Effekte die erreichbare Oberflächenqualität stören.

Für die Erzeugung von Prägeformen mit unterschiedlichen Strukturen ist es vorteilhaft, diese durch unterschiedliche Laservorrichtungen bearbeiten zu lassen, um bei unterschiedlicher Auflösung bzw. unterschiedlicher Spotgrössen des Fokus sowie unterschiedlichen Leistungen im Auftreffpunkt zu den Makrostrukturen auch Mikrostrukturen erzeugen zu können.

Für eine nachfolgende Mikrostrukturierung arbeiten die heute verfügbaren Kurzpulslaser bei Wellenlängen von 700 nm bis 2100 nm, was eine entsprechende Auflösung der Gravur unter 1 µm ermöglicht. Eine noch höhere Auflösung ist durch eine Frequenzvervielfachung der Laserstrahlung möglich. Gegebenenfalls mit einer Überlagerung einer feineren Struktur wäre eine Hologrammerzeugung direkt auf der Prägewalze möglich, zur anschliessenden Übertragung desselben auf die Folie. Dabei kann es vorteilhaft sein, die bereits makrostrukturierte Walze mit einem Überzug aus z.B. ta-C zu versehen.

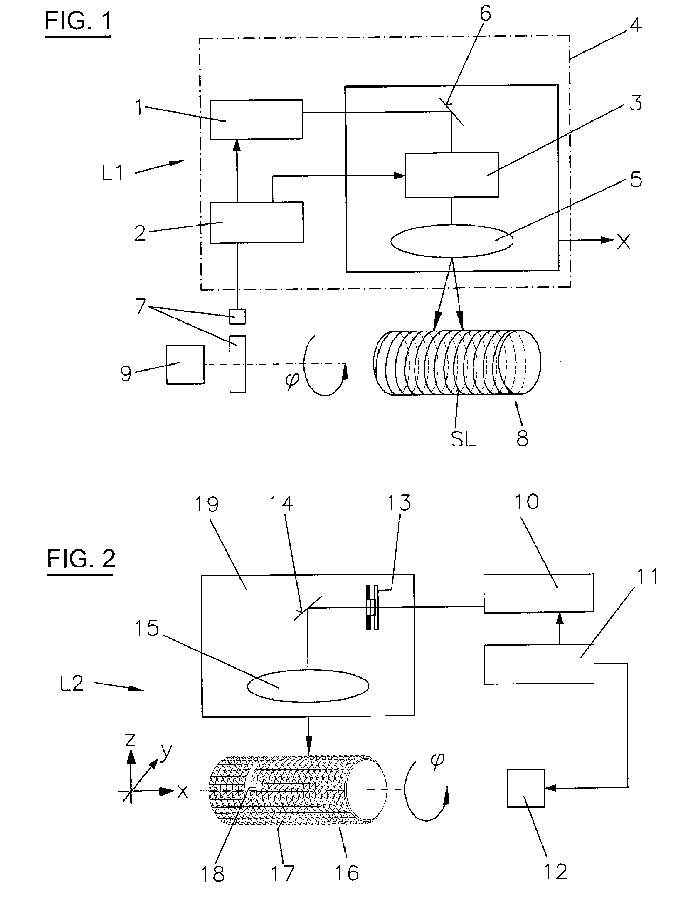

In Fig. 1 ist eine erste Laseranlage L1 schematisch dargestellt, die für eine kontinuierliche Gravur = Makrostrukturierung vorgesehen ist. L1 weist einen Laser 1 auf, der mit einer Steuerschaltung 2 verbunden ist, die den Laser 1 und eine Ablenkeinheit 3, die Strahlteiler sowie akusto-optische oder elektro-optische Modulatoren oder Polygonspiegel enthalten kann, steuert. Die Ablenkeinheit 3, die Fokussieroptik 5 und der Ablenkspiegel 6 bilden die Gravureinheit 4, die linear in der X-Achse verschoben werden kann, wie symbolisch mit dem X-Pfeil angedeutet. Es kann aber auch vorgesehen werden, die gesamte Laservorrichtung L1 in der X-Achse zu verschieben.

Die Steuerschaltung 2 ist mit einem Positionsgeber 7 verbunden, um die Daten des drehenden Werkstücks 8, hier ein Prägewalzen-Rohling, aufzunehmen und zu verwerten. Das Werkstück wird durch einen Antrieb 9 angetrieben. Durch die Kombination der Linearverschiebung der Gravureinheit und Drehung der Walze entsteht eine konstante Schraubenlinie SL die eine gleichmässige Bearbeitung ermöglicht.

Die Verwendung einer Ablenkeinheit, die beispielsweise einen oder mehrere Strahlteiler sowie elektro-optische oder akusto-optische Modulatoren oder ein oder mehrere Polygonspiegel enthalten kann, ermöglicht die Aufspaltung des ursprünglichen Laserstrahls in zwei oder mehrere Laserstrahlen, die auf zwei oder mehrere Spuren SL gleichzeitig auftreffen, aber einen derartigen Abstand voneinander aufweisen, dass sie sich gegenseitig nicht stören. Ausserdem kann die Zeitspanne zwischen dem Auftreffen der einzelnen Pulse so gross gewählt werden, dass eine thermische Überbeanspruchung nicht erfolgt.

Fig. 2 zeigt eine Laseranlage, die eine blockweise Bearbeitung des Werkstücks ermöglicht, die bei einer geeigneten Auswahl der Parameter ebenfalls die erstrebte Makrostrukturierung erlaubt. Die Laseranlage 2 weist eine Laservorrichtung 10 auf, die mit einer Steuerschaltung 11 verbunden ist, die ihrerseits mit einem Drehantrieb 12 verbunden ist.

Der Laserstrahl LA gelangt durch eine Masken-Blenden-Kombination 13 auf einen Ablenkspiegel 14 und anschliessend durch eine Abbildungsoptik 15, die zusammen die Gravureinheit 19 bilden, auf das Werkstück 16. Das Werkstück ist hier als makrostrukturierte Prägewalze mit Zähnen 17 und Logolücke 18 dargestellt. In dieser Ausführungsvariante kann das Werkstück in den drei Koordinaten verschoben und mittels Drehantrieb 12 in Drehung versetzt werden. Für gewisse Anwendungen kann dieses Prinzip auch für eine Bearbeitung gemäss Fig. 1 angewandt werden. Auch ist eine Kombination beider Verschiebe-Verfahren möglich.

Durch die Verwendung von Kurzpulslasern, deren Laserpulse zwischen 10 Femtosekunden und 100 Picosekunden liegen, wird die Energie in einem sehr kurzen Zeitraum aufgebracht, so dass eine sogenannte "kalte Abtragung" möglich wird, bei der das Material ohne unakzeptable Erhitzung des benachbarten Materials sehr schnell verdampft wird. Der unerwünschte flüssige Zustand des Materials, der Kraterränder und Spritzer erzeugt, kann dabei praktisch vollständig vermieden werden. Somit können solche Laser erfolgreich auch für die sog. Blockbearbeitung gemäss Fig. 2 eingesetzt werden.

Wie bereits erwähnt ist es ein Ziel der vorliegenden Erfindung, insbesondere Prägewalzen aus Stahl herzustellen, die eine sehr grosse Anzahl von kleinen Zähnen, sowie Gebiete mit keinen oder modifizierten Zähnen, wobei sowohl die Zahnform, z.B. Pyramiden mit quadratischem oder rechteckigem Grundriss, oder kegelstumpfförmig, als auch die Zahnhöhe und der Pitch, d.h. der Abstand zwischen den Zähnen, variieren kann oder Patrizen-Matrizenstrukturen mit den Patrizenstrukturen zugeordneten Matrizenstrukturen oder Falz- oder Perforationswerkzeuge und dergleichen, aufweisen.

Eine für die oben angegebenen Strukturen vorgesehene, sinnvolle ökonomische industrielle Nutzung von Hochleistungs ps-Systemen war bisher nicht möglich. Im Gegensatz zur Herstellung von Druckformen konnte insbesondere keine Lösung zur Bearbeitung von Stahlwalzen im vorgesehenen Umfang gefunden werden. Die Körnigkeit dieses Materials und die Inhomogenitäten in der Mischung der Bestandteile standen dem entgegen.

Bei aufwendigen Untersuchungen mit dem Ziel, Stahl bis zu Tiefen um 400 µm mit geringen Rauhigkeitswerten zu strukturieren, traten verschiedene Probleme zutage, die eine Anwendung für die vorgesehene Makroprägung verunmöglichten. Dies zusätzlich zu den oben beschriebenen Problemen der Makrobearbeitung. Namentlich zeigten sich nach der Laser-Bearbeitung, bedingt durch Gefügeunterschiede sowie andere Materialabhängigkeiten, kaum eliminierbare Aufwölbungen sowie Lochbildungen.

Es zeigte sich ebenfalls, dass das theoretische pro Puls und Folgefrequenz berechnete Abtragungsvolumen stark von der effektiven Abtragungsrate abweicht. Es bestanden daher keine technisch nutzbaren Parameter und Zusammenhänge, um eine industrielle Nutzung der Kurzpulstechnik für Stahl ins Auge zu fassen.

Nach langen Versuchen wurde die nachfolgende Parameter-Kombination gefunden, die den Fachmann in die Lage versetzt, die Gravur von Stahlwalzen für in der für Feinprägetechnik notwendigen Reproduktionsgenauigkeit und Qualität herzustellen. Dabei wird unter den Kurzpulslasern zwischen den Femtosekunden-(fs)-Lasern und Picosekunden-(ps)-Lasern mit einer Pulsdauer zwischen 10 fs und 100 ps unterschieden.

Abgesehen von der vom Lasertyp abhängigen festgegebenen Pulsdauer spielen bei der vorgesehenen, industriellen Nutzung eine grosse Anzahl Parameter, insbesondere, jedoch nicht ausschliesslich, bei der Gravur von Stahl eine Rolle.

Dazu gehören bei Laser im Einzelpulsbetrieb:
a) Fluenz,
b) Wellenlänge
c) Repetitionsrate,
d) Puls-zu-Puls-Distanz auf dem Werkstück,
e) Position der Laserstrahlfokussebene bzw. der Laserstrahlabbildungsebene relativ zur Oberfläche des Substrats,
f) Ablenkgeschwindigkeit.

Bis vor kurzem waren die verfügbaren Strahlführsysteme nicht in der Lage, die Laserleistungen mit der erforderlichen Qualität und Bearbeitungszeit auf die Gravuroberfläche zu bringen, da die erforderlichen Ablenkgeschwindigkeiten von über 100 m/s unter Einhaltung der erforderlichen Genauigkeit des Bearbeitungsvorganges nicht erreicht werden konnten. Für Strukturbreiten von zB 100 µm sollte der Gausssche Strahlradius nicht mehr als 15 µm betragen, was zudem eine sehr hohe Beherrschung der Laserstrahl-Positioniergenauigkeit, definiert durch die Feinheit der zu erzeugenden Struktur auf dem Substrat, erforderlich macht.

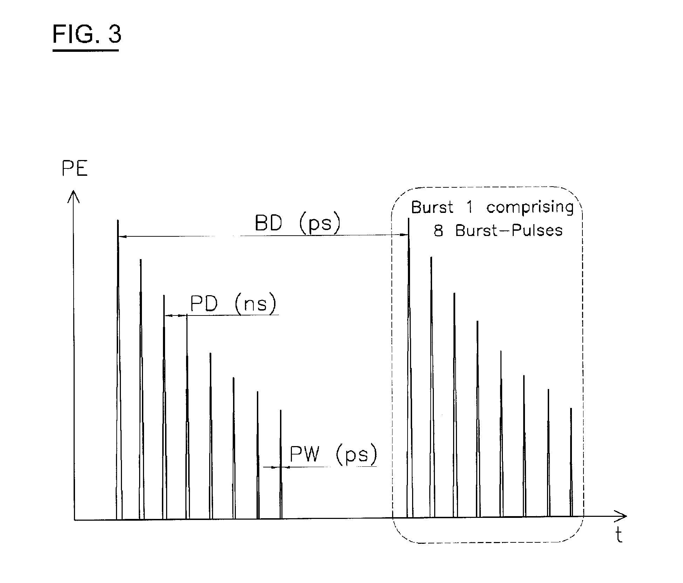

Bei weiteren Untersuchungen stellte es sich heraus, dass die gewünschte Bearbeitung von Prägewalzen mittels Einzelpulsen stark verbessert werden kann, falls andere Pulsfolgen verwendet werden. Dabei ist ein besonderer, bisher für ausgewählte ps-Laser-Typen entwickelter Betriebsmodus, der Pulszugmodus, in der Fachliteratur als "burst-mode" bekannt, mit dem gute Ergebnisse bei der Gravur von Stahl erreicht werden können. Im Pulszugmodus werden im Unterschied zum oben beschriebenen Einzelpulsbetrieb eines ps-Lasers mit einer vorgegebenen Repetitionsrate keine ps-Laserstrahlpulse sondern ps-Laserstrahl-Pulszüge generiert mit zeitlichen Puls zu Puls-Abständen der einzelnen Pulse, "bursts", im Zug im Bereich von einigen Zehn Nanosekunden, typisch 20 ns und zeitlichen Pulszug zu Pulszug-Abständen im Bereich von 10⁻³ bis 10⁻⁷ Sekunden, typisch 10 µs, d.h. mit einer Pulszug-Wiederholfrequenz, Repetitionsrate des Lasers, von 1kHz bis 10 MHz, siehe Fig. 3.

Fig. 3 zeigt eine stark schematische Darstellung eines Beispiels von Pulszügen, wobei die x-Achse die Zeitachse ist und auf der y-Achse die Pulsenergie eingezeichnet ist.

Die mögliche maximale Repetitionsrate des ps-Lasers im Pulszugmodus hängt von der Anzahl der einzelnen Pulse im Pulszug ab und wird durch diese begrenzt. Die Pulsdauer der Einzelpulse des ps-Lasers und die Pulsdauern der Pulse im Pulszugmodus sind vergleichbar.

Ein Pulszug kann einstellbar aus bis zu 20 einzelnen ps-Pulsen bestehen. Die Pulsenergie der einzelnen Pulse im Pulszug kann sich dabei nach einer für das Lasergerät typischen Funktion exponentiell verringern bei gleichem zeitlichen Puls zu Puls-Abstand der einzelnen Pulse im Pulszug oder der Verlauf der Pulsenergie der Einzelpulse im Pulszug kann vorgegeben werden, so dass eine gleich bleibende Pulsenergie der Pulse im Pulszug oder eine Verringerung oder Vergrößerung der Pulsenergie der Pulse im Pulszug oder auch zuerst eine Verringerung und danach wieder eine Vergrößerung der Pulsenergie der Pulse im Pulszug möglich ist.

Des Weiteren können auch ein Puls oder mehrere Pulse im Pulszug unterdrückt werden, z.B. im "FlexBurst^{™}-Mode" bei den Lasertypen "Time-Bandwidth Duetto^{™}" und "Time-Bandwidth Fuego^{™}" der Firma "Time-Bandwidth Products". Eine Frequenzverdopplung oder Frequenzverdreifachung oder weitere Frequenzvervielfachung, SHG oder THG, der Laserstrahlung ist auch im Pulszugmodus- Betrieb des ps-Lasers möglich.

Daraus ergeben sich folgende Parameter bei Laser im Pulszugmodus:
g) Zahl der Einzelpulse im Pulszug,
h) Pulsdauer der Einzelpulse im Pulszug,
i) Zeitlicher Pulsabstand der Einzelpulse im Pulszug,
j) mittlere Pulszug-Fluenz auf dem Werkstück,
k) Strahlfokusradius auf dem Werkstück, und
l) Verteilung der Pulszugfluenz auf die Einzelpulse.

Mögliche Bearbeitungsparameter und -ergebnisse beim Betrieb des ps-Lasers im Pulszugmodus sind beispielsweise:
Pulszahl im Pulszug bis 20,
Fluenz des Pulszug 0,5 - 70 J/cm²,
Abtragtiefe pro Pulszug bis 100 nm,
Abtragvolumen pro Pulszug bis 100 µm³,
Boden - Rauhigkeit der erzeugten Strukturen von 450 nm
bis 1000 nm bei Strukturtiefen von 60 µm bis 200 µm.

Die Vorteile der Pulszugmodus-Bearbeitung im Vergleich zur ps-Laser-Bearbeitung mit Einzelpulsen sind: Höhere Abtragraten bei der Strukturierung von metallischen Werkstoffen im Vergleich zur ps-Pulsbestrahlung mit Einzelpulsen mit der gleichen Energie wie die Pulszug-Gesamtenergie, d.h. bei den gleichen Fluenzen der Einzelpulse und der Pulszüge und bei gleichem Puls zu Puls - Abstand und Überlappungsgrad der Einzelpulse und der Pulszüge, d.h. bei der gleichen Repetitionsrate der Einzelpulse wie die Pulszugrepetitionsrate.

Bessere Qualität, insbesondere geringere Flächenrauhigkeiten der erzeugten Strukturformen im Vergleich zur ps-Pulsbestrahlung mit Einzelpulsen bei gleichen Überlappungsgrad, auch bei höheren Fluenzen des Pulszug.

Im Pulszugmodus kann mit höheren Pulszug-Gesamtenergien, d.h. mit höheren Fluenzen des Pulszuges auf der Werkstückoberfläche strukturiert werden als mit Einzelpulsen. Da die Pulsenergien der einzelnen Pulse im Pulszug durch die Anzahl der Pulse im Pulszug entsprechend geringer sind als bei Einzelpulsen mit der gleichen Pulsenergie wie die Pulszug-Gesamtenergie, sind auch die Fluenzen der einzelnen Pulse im Pulszug wesentlich geringer als die Fluenz der Einzelpulse; im Pulszugmodus wird somit im "low fluence regime", d.h. nicht wesentlich oberhalb der Ablationsschwelle, gearbeitet und man erhält, wie nachgewiesen werden konnte, eine höhere Qualität der erzeugten Strukturformen. Bei der Strukturierung mit Einzelpulsen können auf diese Weise hohe Pulsenergien nicht verwendet werden, da man sich dann bereits im "high fluence regime", d.h. weit oberhalb der Ablationsschwelle, befindet und die Qualität der erzeugten Strukturen geringer ist.

Die oben angegebenen Parameter können beispielhaft die nachfolgenden Werte aufweisen. Für den Einzelpulsbetrieb sind dies:
a) Fluenz:
   fs-Laser: Bei der Bearbeitung mit Femtosekundenpulsen wird ein Fluenzbereich von 0,5 J/cm² bis 3,5 J/cm² vorgeschlagen. Versuche mit höheren Fluenzen erwiesen sich als nicht zufriedenstellend.
      ps-Laser: Bei den Versuchen wurde festgestellt, dass sich hohe Fluenzen nicht für die Bearbeitung mit Picosekundenpulsen eignen. Der verwendbare Fluenzbereich sollte sich kurz oberhalb der Ablationsschwelle befinden. Es wurden Fluenzen von 0,5 J/cm² bis 10 J/cm² untersucht und es wurde festgestellt, dass der Bereich von 0,5 - 3 J/cm² die besten Ergebnisse für die Bearbeitung brachte.
b) Wellenlänge
   Es wurden drei unterschiedliche Wellenlängen verwendet, 775 nm, 1030 nm und 1064 nm, und es wurde bei 1064 nm eine Frequenzverdopplung durchgeführt, die eine Halbierung der Wellenlängen auf 532 nm bewirkte. Es zeigte sich, dass die Wellenlänge aufgrund des unterschiedlichen Absorptionsgrades das Ergebnis beeinflusst. Höhere Wellenlängen scheinen auf Grund des geringen Absorptionsgrades für die Bearbeitung nicht geeignet. Daraus ergibt sich für die vorgesehene Bearbeitung ein Bereich von 532 nm bis 1064 nm.
c) Repetitionsrate
   Es wurden Versuche mit Pulsfolgefrequenzen bis zu 1 MHz durchgeführt. Es zeigte sich, dass bis zu dieser Frequenz gute Ergebnisse realisierbar waren. Jedoch verschlechterte sich das Ergebnis mit höherer Pulsfolgefrequenz etwas. Ein Weg, die hohen Frequenzen zu vermeiden und trotzdem eine hohe Produktivität zu erzielen ergibt sich mit der Strahlaufteilung. So gibt es z.B. auf dem Markt 400-W-Kurzpulslaser, deren Strahl in 8 Teilstrahlen zur gleichzeitigen Bearbeitung aufgeteilt wird. Die Repetitionsrate bleibt dadurch bei ca. 1 MhZ. Es wird eine Repetitionsrate von 1kHz bis 10 Mhz vorgeschlagen.
d) Puls-zu-Puls-Distanz auf dem Werkstück.
   Es zeigte sich, dass durch eine grössere Überlappung aufeinanderfolgender Pulse die Abtragsrate verringert wurde. Dies ist darauf zurückzuführen, dass durch den voran gegangenen Puls der nachfolgende Puls abgeschirmt wird. Es sollte deswegen zwischen den Pulsen eine hohe Puls-zu-Puls-Distanz auf dem Werkstück gewählt werden.
   ps-Laser: Vorgeschlagener Bereich für die Bearbeitung: 40-50% des Strahldurchmessers als Puls-zu-Puls-Distanz auf dem Werkstück für kleine Pulsbearbeitungsdichten. Bei höheren Dichten ist eine geringere Ueberlappung im Bereich von 10%-25% anzustreben.
   fs-Laser: Puls-zu-Puls-Distanz auf dem Werkstück 10% - 50% des Strahldurchmessers.
e) Position der Laserstrahlfokussebene relativ zur Oberfläche des Substrats.
   Bei sämtlichen Versuchen wurde der Fokus auf die Oberfläche des Werkstücks gelegt. Eine Verlegung des Fokus oberhalb des Werkstückes ist nicht ratsam. Daher wird vorgeschlagen, den Fokus bei, d.h. auf oder leicht unter die Oberfläche des Werkstücks zu legen.
f) Ablenkgeschwindigkeiten bis über 100 m/s wurden untersucht und für anwendbar gefunden.

### Strahldurchmesser

Bei den Versuchen wurden verschiedene Strahldurchmesser verwendet. Dieser Parameter hat bei der Bearbeitung keinen grossen Einfluss.

### Pulsbreite

Die verwendeten Pulsbreiten waren 150 fs, 178 fs und 12 ps. Alle Pulsbreiten waren für die Bearbeitung geeignet. Möglicherweise kann die Pulsbreite noch erhöht werden, um die Abtragsrate bei weiterhin guter Qualität noch zu steigern. Geringere Pulsbreiten bewirken zwar eine bessere Qualität, dies ist jedoch mit einer geringeren Abtragsrate verbunden. Daraus folgend wird für die vorgesehene Bearbeitung ein Pulsbreiten-Bereich von 150 fs - 12 ps vorgeschlagen.

Bei der Bearbeitung im Pulszugbetrieb ergaben sich noch folgende typische, nicht einschränkende Werte:
h) Pulsdauer der Einzelpulse im Pulszug von 5 ps bis 15 ps,
i) Zeitlicher Pulsabstand der Einzelpulse im Pulszug von 10 ns bis 30 ns,
j) mittlere Pulszug-Fluenz auf dem Werkstück von 0,5 J/cm² bis 70 J/cm²,
k) Strahlfokusradius auf dem Werkstück, von 10 µm bis 50 µm, wobei der Verlauf der Pulsenergie der einzelnen Pulse im Pulszug sukzessive verringert, vergrössert oder vorgegeben eingestellt wird.

Die Werte von b) bis g) gelten sinngemäss auch für den Pulszugbetrieb sofern sie nicht spezifisch abweichen.

## Patentansprüche

1. Verfahren zum Erzeugen einer strukturierten Oberfläche auf eine Prägewalze aus Stahl mittels Kurzpulslaser, wobei es sich bei der Strukturierung um eine Makrostrukturierung mit Dimensionen von über 20µm und Tiefen bis über 150 µm handelt, die mittels einer Parameter-Kombination von
a) Fluenz im Bereich von 0,5 J/cm² bis 70 J/cm²,
b) Wellenlänge von 532 nm bis 1064 nm,
c) Repetitionsrate von 1 kHz bis 10 MHz,
d) Puls-zu-Puls-Distanz auf dem Werkstück von 10% bis 50% des Strahldurchmessers für den Femtosekundenlaser und von 10- 25 % und 40-50% der Strahlbreite für den Picosekundenlaser,
e) Position der Laserstrahlfokussebene nahe bei der Werkstückoberfläche, und
f) Ablenkgeschwindigkeiten bis über 100 m/s,
erzeugt wird.

2. Verfahren gemäss Anspruch 1, **dadurch gekennzeichnet, dass** das Werkstück kontinuierlich bearbeitet wird, indem der Auftreffort des Laserstrahls auf der Werkstückoberfläche simultan in der X-Achse und im Umfang verschoben wird.

3. Verfahren gemäss Anspruch 2, **dadurch gekennzeichnet, dass** der Laserstrahl in der X-Achse verschoben und simultan das Werkstück gedreht wird.

4. Verfahren gemäss Anspruch 1, **dadurch gekennzeichnet, dass** das Werkstück blockweise bearbeitet wird, indem es sowohl in allen drei Koordinaten verschoben als auch gedreht wird.

5. Verfahren nach einem der Ansprüche 1 bis 4, **dadurch gekennzeichnet, dass** der ps-Laser als Kurzpulslaser im Pulszugmodus mit folgenden zusätzlichen Parametern betrieben wird:
g) Zahl der Einzelpulse im Pulszug von 2 bis 20,
h) Pulsdauer der Einzelpulse im Pulszug von 5 ps bis 15 ps,
i) Zeitlicher Pulsabstand der Einzelpulse im Pulszug von 10 ns bis 30 ns,
j) mittlere Pulszug-Fluenz auf dem Werkstück von 0,5 mJ/cm² bis 70 J/cm², vorzugsweise 10 J/cm²,
k) Strahlfokusradius auf dem Werkstück von 10 µm bis 50 µm, wobei der Verlauf der Pulsenergie der einzelnen Pulse im Pulszug sukzessive verändert oder vorgegeben eingestellt wird.

6. Vorrichtung zur Durchführung des Verfahrens nach Anspruch 1, **dadurch gekennzeichnet, dass** sie eine Laservorrichtung (L1, L2) mit einem Kurzpulslaser (1, 10) im Femto- oder Picosekundenbereich aufweist, der
a) im Einzelpulsbetrieb eine Fluenz im Bereich von 0,5 J/cm² bis 3,5 J/cm² und im Pulszugbetrieb eine mittlere Pulszug-Fluenz von 0,5 J/cm² bis 70 J/cm² pro Puls,
b) eine Wellenlänge von 532 nm bis 1064 nm,
c) eine Repetitionsrate von 1 kHz bis 10 MHz,
d) eine Puls-zu-Puls-Distanz auf dem Werkstück von 10% bis 50% des Strahldurchmessers für den Femtosekundenlaser und von 10- 25 % und 40-50% der Strahlbreite für den Picosekundenlaser aufweist,
wobei die Laservorrichtung (L1, L2) eine Gravureinheit (4, 19) zum Makro-Gravieren eines Werkstücks (8, 16) aus Stahl und eine Steuereinheit (2, 11), um den Auftreffort des Laserstrahls auf der Werkstückoberfläche simultan in der X-Achse und im Umfang zu verschieben, aufweist.

7. Vorrichtung nach Anspruch 6, **dadurch gekennzeichnet, dass** die Gravureinheit (4) Strahlteilungs- und Strahlablenkeinheiten (3) sowie eine Fokussieroptik (5) aufweist, wobei die Gravureinheit oder die ganze Laservorrichtung (L1) in der X-Achse verschiebbar und das Werkstück drehbar gelagert ist.

8. Vorrichtung nach Anspruch 6, **dadurch gekennzeichnet, dass** die Gravureinheit (19) eine Abbildungseinheit (15) aufweist und das Werkstück (16) sowohl drehbar als auch in den drei Koordinatenachsen (X, Y, Z) verschiebbar gelagert ist.
